# EUROPÄISCHE PATENTSCHRIFT

(11) **EP 2 758 256 B1**
(45) Veröffentlichungstag und Bekanntmachung des Hinweises auf die Patenterteilung: **14.03.2018**
(21) Anmeldenummer: 12748012.7
(22) Anmeldetag: 10.08.2012
(51) Int. Cl.: B60C 15/04, B60C 15/05, B60C 15/06

(54) **FAHRZEUGLUFTREIFEN IN RADIALBAUART**
PNEUMATIC VEHICLE TYRE WITH A RADIAL DESIGN
PNEUMATIQUE DE VÉHICULE DE TYPE RADIAL

(30) Priorität: 21.09.2011 DE 102011053822
(43) Veröffentlichungstag der Anmeldung: 30.07.2014
(73) Patentinhaber: Continental Reifen Deutschland GmbH, 30165 Hannover (DE)
(72) Erfinder: NEUMANN, Axel, 31559 Hohnhorst (DE); LENZ, Michael, 27619 Schiffdorf (DE); VALKO, Jozef, 02001 Puchov (SK)
(74) Vertreter: Finger, Karsten
(86) Internationale Anmeldenummer: PCT/EP2012/065635
(87) Internationale Veröffentlichungsnummer: WO 2013/041301

(56) Entgegenhaltungen:
- EP-A1- 0 615 868
- EP-A1- 1 640 186
- EP-A2- 0 167 283
- WO-A1-2009/043377
- WO-A1-2009/043377
- WO-A2-2011/097213
- WO-A2-2011/097213
- JP-A- 2000 001 110
- US-A- 5 186 772
- US-B1- 6 422 280
- US-B1- 6 422 280

## Beschreibung

Die Erfindung betrifft einen Fahrzeugluftreifen in Radialbauart für Personenkraftwagen mit einem Laufstreifen, einem Gürtelverband, Seitenwänden, einer Innenschicht und einer radial verlaufenden Karkasseinlage, welche Wulstkerne in Wulstbereichen von axial innen nach axial außen umläuft und deren Hochschläge bis in den Bereich der jeweiligen Seitenwand oder bis unter den Gürtelverband reichend rückgeführt sind, wobei die Wulstkerne Hochkantkerne sind, deren in axialer Richtung ermittelte Kernbreite wesentlich geringer ist als deren in radialer Richtung ermittelte Kernhöhe und welche in axialer Richtung aus 2 bis 3 Stahldrähten und in radialer Richtung aus 8 bis 15 Stahldrähten, welche einen Durchmesser von 0,7 mm bis 1,6 mm, aufweisen, bestehen, und wobei die Wulstbereiche jeweils einen Wulstgummi aufweisen, welcher mit einer Felge in Kontakt kommt und axial innen eine Wulstzehe aufweist, welche an das radial innere Ende der Innenschicht anschließt.
Es ist bekannt, die Wulstbereiche von Fahrzeugluftreifen mit Hochkantkernen zu verstärken. So sind beispielsweise in der FR 812 941 Reifen mit Wulstbereichen offenbart, in welchen Hochkantkerne unterschiedlicher Ausführungen angeordnet sind. Aus der DE 10 2008 049 314 A1 ist ein weiterer Fahrzeugluftreifen für Personenkraftwagen bekannt, dessen Wulstbereiche mit Hochkantkernen verstärkt sind, welche aus gummiertem Stahldraht gewickelte Wulstkerne sind, welche beispielsweise in radialer Richtung acht gummierte Stahldrähte und in axialer Richtung zwei gummierte Stahldrähte aufweisen. Die Wulstkerne haben somit einen rechteckigen Querschnitt mit einer ausgeprägten radialen Erstreckung. Um jeden Wulstkern ist ein Gummistreifen gelegt, der den Wulstkern vollständig umhüllt und aus einer Gummimischung besteht, deren Härte Shore A maximal 85 beträgt. Die Karkasseinlage umläuft die Wulstkerne in Kontakt mit diesem Gummistreifen, ihre Hochschläge können bis unter den Gürtelverband reichen. Der Reifen gemäß der DE 10 2008 049 314 A1 soll eine höhere Biegesteifigkeit im unteren Bereich der Reifenseitenwand bei einer Aufrechterhaltung einer gewissen höheren Flexibilität im Bereich der oberen Seitenwand aufweisen.
Die US 5,186,772 betrifft einen Run-Flat-Reifen in Kombination mit einer speziellen Felge, derart, dass die aus einem harten Gummimaterial gefertigte Wulstzehe vom Wulstbereich vorspringend in einer Vertiefung der Felge sitzt. Eine ähnliche Ausführungsform eines Wulstbereiches zeigt die EP 0 167 283 A2. Der in die Vertiefung der Felge eingreifende Teil im Wulstbereich ist hier als Zusatzteil bezeichnet. Bei dem aus der JP 2000 001110 A bekannten Reifen ist der Wulstgummi mitsamt der Wulstzehe ein mit Kurzfasern verstärkter Gummibauteil. Bei dem aus der EP 0 615 868 A1 bekannten Reifen ist der Wulstzehenbereich mit einem Wulstzehen-Verstärkungsgummimaterial einer hohen Härte aufgefüllt. Aus der EP1640186-A1 ist ein PKW-Reifen mit einem verstärkenden streifenförmigen um den Wulstkern gewickelten Bauteil an der Aussenseite der Karkasseinlage mit einer Härte JIS-A von 70-95 bekannt. Der Einsatz von Hochkantkernen im Reifen ermöglicht es, die Materialmenge in den Wulstbereichen und damit das Reifengewicht zu reduzieren. Des Weiteren ist der Verlauf der Karkasseinlage bei der Verwendung von Hochkantkernen anders als bei herkömmlichen Rechteckkernen mit Apexprofilen. Dieser spezielle Verlauf der Karkasseinlage im Reifen hat günstige Auswirkungen auf das Handlingverhalten des Reifens, insbesondere das Kurvenhandling und die Schräglaufsteifigkeit. Problematisch bei Hochkantkernen ist jedoch, dass durch ihre geringe axiale Kernbreite die Kompressionskraft zwischen dem Reifen und der Felge stark herabgesetzt ist.
Der Erfindung liegt daher die Aufgabe zugrunde, bei einem Fahrzeugluftreifen der eingangs genannten Art mit Hochkantkernen in den Wulstbereichen durch eine einfache und trotzdem wirksame Maßnahme sicherzustellen, dass die Kompressionskraft zwischen Kern und Felge derart erhöht wird, dass ein guter Sitz des Reifens auf der Felge unter allen Fahrbedingungen gewährleistet ist.
Gelöst wird die gestellte Aufgabe erfindungsgemäß dadurch, dass an der Außenseite der *sowie in Kontakt mit der* Karkasseinlage und zumindest im Bereich radial innerhalb der Kernunterseite ein aus Gummi bestehendes oder Gummi aufweisendes, *streifenförmig ausgeführtes* Bauteil verläuft, *welches eine Dicke von 0,5 mm bis 2,5 mm aufweist* und dessen Härte zwischen 90 Shore A und 98 Shore A beträgt.

Das gemäß der Erfindung in den Wulstbereichen vorgesehene Bauteil mit einer Härte von mindestens 90 Shore A sorgt für die erforderliche Kompressionkraft zwischen den Wulstbereichen und der Felge. Es hat sich herausgestellt, dass sich mit erfindungsgemäß ausgeführten Fahrzeugluftreifen *Wulstkennwerte* erzielen lassen, die jenen von Reifen mit herkömmlich ausgeführten Wulstbereichen - mit im Querschnitt rechteckigen Wulstkernen mit Apexprofilen - ohne weiteres entsprechen. Eine streifenförmige Ausführung ist vorteilhaft für einen problemlosen Einbau bei der Reifenherstellung.

Bei einer bevorzugten Ausführungsform der Erfindung ist das Bauteil ein Gummibauteil. Durch entsprechende Auswahl der Bestandteile der Gummimischung lässt sich die gewünschte Härte des Gummibauteils gut einstellen.

Die in der nachfolgenden Beschreibung angegebenen Größen und Dimensionsangaben beziehen sich auf einen auf einer Standardfelge montierten Fahrzeugluftreifen für Personenkraftwagen unter Standardinnendruck, jedoch im unbelasteten Zustand und gemäß den E.T.R.T.O.-Standards in der derzeit geltenden Fassung. Radiale Höhen, auf welche in der Beschreibung Bezug genommen wird, werden von einer Basislinie B₁ aus ermittelt, welche in axialer Richtung verläuft und die jeweils angedeutete Felge dort schneidet, wo sich das äußere Ende des Felgenradius befindet.

Die Figuren zeigen Querschnitte eines Fahrzeugluftreifens in Radialbauart für Personenkraftwagen mit einem Laufstreifen 10 und einem Gürtelverband 11 mit mindestens zwei Gürtellagen. In den Figuren ist jeweils ein Abschnitt einer Felge 8 mit Felgenhörnern 8a angedeutet. Von den Reifenbauteilen sind ferner eine elastomere Innenschicht 1 an der Innenseite des Reifens, eine elastomere Seitenwand 2, eine Karkasseinlage 3, ein Wulstkern 4 und ein Wulstgummi 5 dargestellt. Die Karkasseinlage 3 besteht insbesondere in bekannter Weise aus zumindest einer Lage aus gummierten Korden, welche zumindest im Wesentlichen in radialer Richtung verlaufen. Die Karkasseinlage 3 ist jeweils von axial innen nach axial außen um die Wulstkerne 4 geschlagen und reicht mit ihrem umgeschlagenen Abschnitten, den Hochschlägen 3a, zumindest bis auf eine Höhe h₁ von 20 % der Querschnittshöhe H des Reifens. Die Hochschläge 3a können bis unter die Gürtellagen reichen. Der Wulstkern 4 ist ein Hochkantkern, welcher, von der Karkasseinlage 3 komplett umschlossen ist und daher nur mit dieser und deren Hochschlag 3a in Kontakt steht. Der Hochkantkern 4 besteht in axialer Richtung aus 2 bis 3 Stahldrähten und in radialer Richtung aus 8 bis 15 Stahldrähten, welche einen Durchmesser von 0,7 mm bis 1,6 mm, insbesondere von 0,89 mm bis 1,2 mm aufweisen. Der Wulstgummi 5 ist jener Bauteil des Reifens, welcher mit der Felge 8 in Kontakt kommt und weist axial innen eine Wulstzehe 5a auf, welche an das radial innere Ende der Innenschicht 1 anschließt. Die schmalen Hochkantkerne 4 erlauben einen in axialer Richtung breiteren Verlauf der Karkasseinlage 3 und des Hochschlages 3a, welcher für das Handling des Reifens, insbesondere das Handling beim Kurvenfahren und vor allem für die Schräglaufsteifigkeit des Reifens, von großem Vorteil ist. Problematisch war bislang die Sicherstellung der erforderlichen Klemmkraft des Fahrzeugluftreifens mit Hochkantkernen zur Felge. Zur Lösung dieses Problems werden gemäß der Erfindung verschiedene alternative Maßnahmen vorgeschlagen.

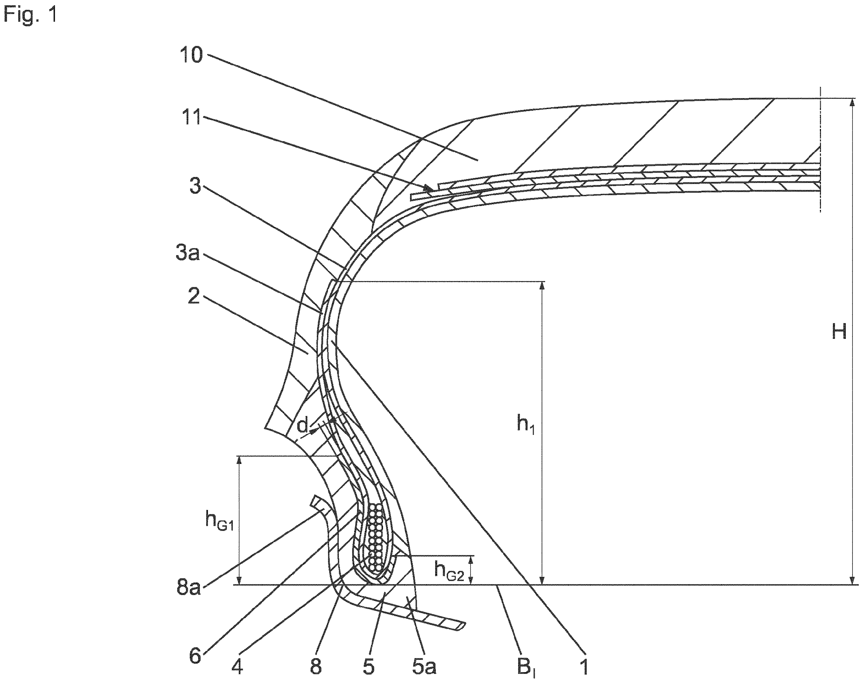

Bei der in Fig. 1 gezeigten Ausführungsvariante verläuft radial innerhalb des Hochkantkernes 4 und von außen in Kontakt mit der Karkasseinlage 3 ein gesondertes Gummibauteil 6. Das Gummibauteil 6 besteht aus einer harten Gummimischung mit einer Härte von 90 bis 98 Shore A, insbesondere von mindestens 94 Shore A. Das Gummibauteil 6 ist ein streifenförmiges Bauteil mit einer Dicke d von 0,5 mm bis 2,5 mm, welches zwischen dem Wulstgummi 5 und der Karkasseinlage 3 verläuft. Bei der in Fig. 1 gezeigten Ausführungsform reicht das Gummibauteil 6 entlang des Hochschlages 3a bis auf eine Höhe h_{G1} von 15 bis 40 % der Querschnittshöhe H. An der Innenseite des Reifens endet das Gummibauteil 6 bei der Innenschicht 1 bzw. reicht bis auf eine Höhe h_{G2} von 5 bis 20 % der Querschnittshöhe H.

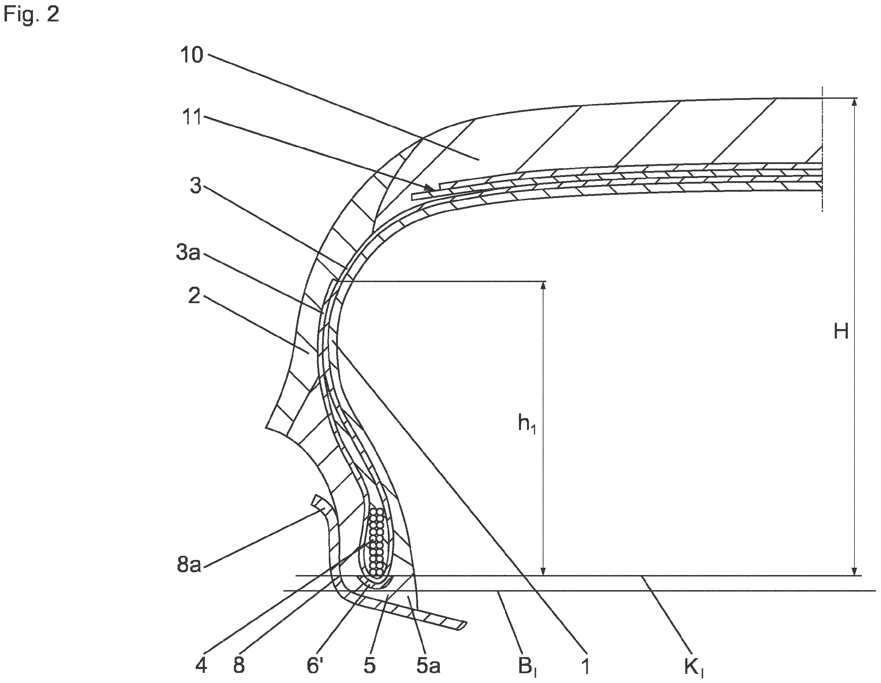

Bei der in Fig. 2 gezeigten Ausführungsform ist ein Gummibauteil 6' mit der erwähnten Härte vorgesehen, welches im Wesentlichen entlang des um den Hochkantkern 4 gelegenen Abschnittes der Karkasseinlage 3 verläuft. In radialer Richtung erstreckt sich das Bauteil 6' zumindest bis auf Höhe der Kernunterseite - siehe Linie K₁ in Fig. 2.

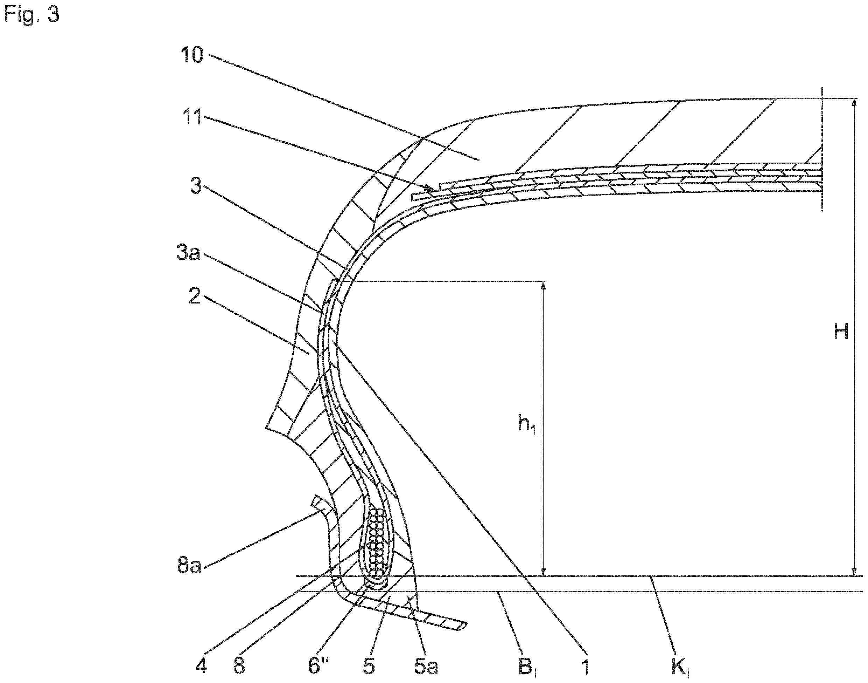

Fig. 3 zeigt eine Ausführungsvariante, bei welcher ein Gummibauteil 6" aus der harten Gummimischung vorgesehen ist, welches als sehr schmaler Streifen radial innerhalb der Kernunterseite und in Kontakt mit der Karkasseinlage 3 verläuft.

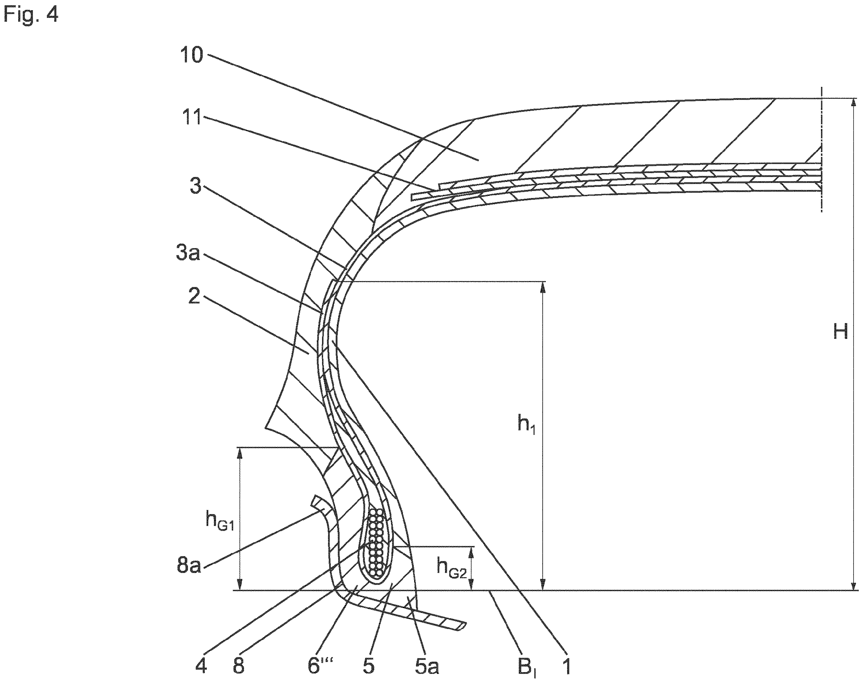

Fig. 4 zeigt eine Ausführungsform mit einem Gummibauteil 6"', welches den Wulstgummi 5 zumindest teilweise oder auch komplett ersetzt. Die harte Mischung des Gummibauteils 6"' ist daher in Kontakt mit der Felge 8 und dessen Felgenhorn 8a, bildet daher die Wulstzehe und schließt unmittelbar an die Innenschicht 1 an. Entlang des Hochschlages 3a und an der Reifeninnenseite kann das Gummibauteil 6"' bis auf die Höhen h_{G1} und h_{G2} verlaufen.

Bei sämtlichen Ausführungsformen, kann an Stelle eines Gummibauteils ein Verbundbauteil, welches einer Härte zwischen 90 und 98 Shore A, insbesondere von mindestens 94 Shore A aufweist, vorgesehen sein. Das Verbundbauteil besteht aus einer Schicht oder mehreren Schichten von in einer Gummimischung eingebettetem Gewebe, insbesondere aus Nylon, Polyester, Rayon oder Aramid. Mögliche Ausführungen des Verbundbauteils werden analog zu den Gummibauteilen 6, 6', 6", 6"' dimensioniert und angeordnet.

Durch die Erfindung wird eine derart hohe Kompressionskraft zwischen den Hochkantkernen 4 und der Felge 8 sichergestellt, dass ein guter Wulstsitz des Reifens unter allen Fahrbedingungen gewährleistet ist.

### Bezugsziffernliste

- 1: Innenschicht
- 2: Seitenwand
- 3: Karkasseinlage
- 3a: Einlagenumschlag
- 4: Wulstkern
- 5: Wulstgummi
- 5a: Wulstzehe
- 6: Gummibauteil
- 6': Gummibauteil
- 6": Gummibauteil
- 6"': Gummibauteil
- 7: Verbundkörper
- 8: Felge
- 8a: Felgenkörner
- 10: Laufstreifen
- 11: Gürtelverband
- h₁: Höhe
- h_{G1}: Höhe
- h_{G2}: Höhe
- d: Dicke
- H: Querschnittshöhe

## Patentansprüche

1. Fahrzeugluftreifen in Radialbauart für Personenkraftwagen mit einem Laufstreifen (10), einem Gürtelverband (11), Seitenwänden (2), einer Innenschicht (1) und einer radial verlaufenden Karkasseinlage (3), welche Wulstkerne in Wulstbereichen von axial innen nach axial außen umläuft und deren Hochschläge (3a) bis in den Bereich der jeweiligen Seitenwand (2) oder bis unter den Gürtelverband (11) reichend rückgeführt sind, wobei die Wulstkerne Hochkantkerne (4) sind, deren in axialer Richtung ermittelte Kernbreite wesentlich geringer ist als deren in radialer Richtung ermittelte Kernhöhe und welche in axialer Richtung aus 2 bis 3 Stahldrähten und in radialer Richtung aus 8 bis 15 Stahldrähten, welche einen Durchmesser von 0,7 mm bis 1,6 mm, aufweisen, bestehen, und wobei die Wulstbereiche jeweils einen Wulstgummi (5) aufweisen, welcher mit einer Felge (8) in Kontakt kommt und axial innen eine Wulstzehe (5a) aufweist, welche an das radial innere Ende der Innenschicht (1) anschließt,
**dadurch gekennzeichnet,**
**dass** an der Außenseite der sowie in Kontakt mit der Karkasseinlage (3) und zumindest im Bereich radial innerhalb der Kernunterseite ein aus Gummi bestehendes oder Gummi aufweisendes, streifenförmig ausgeführtes Bauteil (6, 6', 6") verläuft, welches eine Dicke (d) von 0,5 mm bis 2,5 mm aufweist und dessen Härte zwischen 90 Shore A und 98 Shore A beträgt.

2. Fahrzeugluftreifen nach Anspruch 1, **dadurch gekennzeichnet, dass** das Bauteil ein Gummibauteil (6, 6', 6 ") ist.

3. Fahrzeugluftreifen nach Anspruch 1, **dadurch gekennzeichnet, dass** das Bauteil ein Verbundbauteil aus zumindest einer Lage von in Gummimaterial eingebettetem Gewebe, beispielsweise aus Nylon, Rayon, Polyester oder Aramid, ist.

4. Fahrzeugluftreifen nach einem der Ansprüche 1 bis 3, **dadurch gekennzeichnet, dass** das Bauteil (6) entlang des Hochschlages (3a) der Karkasseinlage (3) bis auf eine Höhe (h_{G1}) reicht, welche zwischen 15 und 40 % der Querschnittshöhe (H) des Reifens beträgt.

5. Fahrzeugluftreifen nach den Ansprüchen 1 bis 4, **dadurch gekennzeichnet, dass** das Bauteil (6) an der Innenseite des Reifens bis auf eine Höhe (H_{G1}) reicht, welche zwischen 5 und 20 % der Querschnittshöhe (H) des Reifens beträgt.

6. Fahrzeugluftreifen nach den Ansprüchen 1 bis 3, **dadurch gekennzeichnet, dass** das als Streifen ausgeführte Bauteil (6', 6") im Wesentlichen lediglich entlang des um die Wulstkernunterseite gebogenen Abschnittes der Karkasseinlage (3) verläuft.

## Claims

1. Pneumatic vehicle tyre of a radial type of construction comprising a tread (10), a breaker belt assembly (11), sidewalls (2), an inner layer (1) and a radially extending carcass insert (3), which runs around bead cores in bead regions from axially inside to axially outside and the turn-ups (3a) of which are taken back into the region of the respective sidewall (2) or to reach under the breaker belt assembly (11), the bead cores being upright cores (4) of which the core width, determined in the axial direction, is substantially smaller than the core height thereof, determined in the radial direction, and which consist of 2 to 3 steel wires in the axial direction and 8 to 15 steel wires in the radial direction, which steel wires have a diameter of 0.7 mm to 1.6 mm, and the bead regions respectively comprising a bead rubber (5), which comes into contact with a rim (8) and has axially on the inside a bead toe (5a), which adjoins the radially inner end of the inner layer (1),
**characterized**
**in that** a component (6, 6', 6'') which consists of rubber or comprises rubber and is configured in the form of a strip runs on the outer side of and in contact with the carcass insert (3) and at least in the region radially within the underside of the core, which component has a thickness (d) of 0.5 mm to 2.5 mm and the hardness thereof is between 90 Shore A and 98 Shore A.

2. Pneumatic vehicle tyre according to Claim 1,
**characterized in that** the component is a rubber component (6, 6', 6'').

3. Pneumatic vehicle tyre according to Claim 1,
**characterized in that** the component is a composite component comprising at least one ply of woven fabric, for example of nylon, rayon, polyester or aramid, embedded in rubber material.

4. Pneumatic vehicle tyre according to one of Claims 1 to 3, **characterized in that** the component (6) reaches along the turn-up (3a) of the carcass insert (3) up to a height (h_{G1}), which is between 15 and 40% of the cross-sectional height (H) of the tyre.

5. Pneumatic vehicle tyre according to Claims 1 to 4,
**characterized in that** the component (6) reaches on the inner side of the tyre up to a height (H_{G1}), which is between 5 and 20% of the cross-sectional height (H) of the tyre.

6. Pneumatic vehicle tyre according to Claims 1 to 3,
**characterized in that** the component (6', 6'') configured as a strip substantially runs only along the portion of the carcass insert (3) that is bent around the underside of the bead core.

## Revendications

1. Bandage pneumatique à structure radiale pour roue de voiture automobile, présentant une bande de roulement (10), un ensemble de ceinture (11), des parois latérales (2), une couche intérieure (1) et une couche de carcasse (3) qui s'étend radialement, qui entoure de l'intérieur à l'extérieur dans la direction axiale les âmes de bourrelet des parties de bourrelet et dont les rabats (3a) sont ramenés jusqu'au niveau de chaque paroi latérale (2) ou jusqu'en dessous de l'ensemble de ceinture (11),
les âmes de bourrelet étant des âmes (4) à bord rabattu dont la largeur, déterminée dans la direction axiale, est essentiellement plus petite que la hauteur déterminée dans la direction radiale, et étant constituées dans la direction axiale de 2 à 3 fils d'acier et dans la direction radiale de 8 à 15 fils d'acier dont le diamètre est compris entre 0,7 mm et 1,6 mm,
chacune des parties de bourrelet présentant un caoutchouc (5) de bourrelet qui entre en contact avec une jante (8) et qui présente axialement vers l'intérieur un orteil (5a) de bourrelet qui se raccorde à l'extrémité radialement intérieure de la couche intérieure (1),
**caractérisé en ce que**
un composant (6, 6', 6'') dont l'épaisseur (d) est comprise entre 0,5 mm et 2,5 mm et dont la dureté Shore A est comprise entre 90 et 98, réalisé en forme de ruban et constitué de caoutchouc ou présentant du caoutchouc, s'étend sur la face extérieure de et en contact avec la couche de carcasse (3) au moins dans la partie située radialement à l'intérieur du côté inférieur de l'âme.

2. Bandage pneumatique selon la revendication 1,
**caractérisé en ce que** le composant est un composant (6, 6', 6'') en caoutchouc.

3. Bandage pneumatique selon la revendication 1,
**caractérisé en ce que** le composant est un composant composite constitué d'au moins une couche de tissu, par exemple en nylon, rayonne, polyester ou aramide, incorporé dans un matériau de caoutchouc.

4. Bandage pneumatique selon l'une des revendications 1 à 3, **caractérisé en ce que** le composant (6) s'étend le long du rabat supérieur (3a) de la garniture de carcasse (3) jusqu'à une hauteur (h_{G1}) qui représente entre 15 et 40 % de la hauteur (H) de la section transversale du bandage de roue.

5. Bandage pneumatique selon l'une des revendications 1 à 4, **caractérisé en ce que** le composant (6) s'étend sur le côté intérieur du bandage de roue jusqu'à une hauteur (H_{G1}) qui représente entre 5 et 20 % de la hauteur (H) de la section transversale du bandage de roue.

6. Bandage pneumatique selon l'une des revendications 1 à 3, **caractérisé en ce que** le composant (6', 6'') réalisé sous la forme d'un ruban s'étend essentiellement uniquement le long de la partie de la garniture de carcasse (3) rabattue autour du côté inférieur de l'âme de bourrelet.
